# EUROPEAN PATENT APPLICATION

(11) **EP 1 830 299 A2**
(43) Date of publication of application: **05.09.2007**
(21) Application number: 07103265.0
(22) Date of filing: 28.02.2007
(51) Int. Cl.: G06F 21/00

(54) **Digital rights management system with diversified content protection process**

(30) Priority: 01.03.2006 US 366191
(71) Applicant: APPLE INC., Cupertino, CA 95014 (US)
(72) Inventor: Farrugia, Augustin J., Cupertino, CA 95014 (US); Fasoli, Gianpaolo, Palo Alto, CA 94301 (US); Riendeau, Jean-François, Cupertino, CA 95014 (US)
(74) Representative: Texier, Christian

(57) **Abstract**

Some embodiments of the invention provide a digital rights management (DRM) method for distributing content to users over a network. Based on a first set of diversity indicia, the method identifies a first security element for distributing a set of content to a first computer. The set of content includes one or more pieces of content. Based on a second set of diversity indicia, the method identifies a second security element for distributing the set of content to a second computer. Based on the first security element, the method protects the set of content for the first computer and sends the protected set of content to the first computer through the network. Based on the second security element, the method protects the set of content for the second computer and sends the protected set of content to the second computer through the network.

## Description

### FIELD OF THE INVENTION

The present invention relates to digital rights management system with a diversified content protection process.

### BACKGROUND OF THE INVENTION

The protection of digital content transferred between computers over a network is fundamentally important for many enterprises today. Enterprises attempt to secure this protection by implementing some form of Digital Rights Management (DRM) process. The DRM process often involves encrypting the piece of content (e.g., encrypting the binary form of the content) to restrict usage to those who have been granted a right to the content.

Cryptography is the traditional method of protecting data in transit across a network. In its typical application, cryptography protects communications between two mutually trusting parties from thievery by attack on the data in transit. However, for many digital file transfer applications today (e.g., for the transfer of audio or video content), the paradigm has shifted, as a party that receives the content (i.e. the "receiving party") might try to break the DRM encryption that the party that supplied the content (i.e., the "distributing party") applied to the content: In addition, with the proliferation of network penetration attacks, a third party may obtain access to the receiving party's computer and thus to the protected content.

In many of the DRM systems today, the weakest link in the security is not the encrypted data but rather the overall cryptographic process. For instance, one of the more successful DRM systems distributes music online. This DRM system distributes to a user's computer content that has been similarly encrypted for all users. The user's computer then decrypts the received content, generates locally keys for encrypting the content, and then uses these locally generated keys to re-encrypt the content. This approach unnecessarily exposes the cryptographic keys necessary for decrypting the content to potential attackers. This approach also distributes content that has been protected similarly for all users based on the same set of security element functions.

Therefore, there is a need in the art for a DRM system that maximally protects content by protecting content differently for different users. Ideally, such a system could protect the content for two different users based on two different sets of indicia, which may be received from the users.

### SUMMARY OF THE INVENTION

Some embodiments of the invention provide a digital rights management (DRM) method for distributing content to users over a network. Based on a first set of diversity indicia, the method identifies a first security element for distributing a set of content to a first computer. The set of content includes one or more pieces of content. Based on a second set of diversity indicia, the method identifies a second security element for distributing the set of content to a second computer. Based on the first security element, the method protects the set of content for the first computer and sends the protected set of content to the first computer through the network. Based on the second security element, the method protects the set of content for the second computer and sends the protected set of content to the second computer through the network or any other means.

At a DRM computer, the method in some embodiments receives (1) the first set of diversity indicia from the first computer and (2) the second set of diversity indicia from the second computer. In other embodiments, the DRM computer does not receive diversity indicia but instead assigns the set of diversity indicia for each computer. Alternatively, in some embodiments, the DRM computer might receive and generate diversity data in the set of indicia that it uses for a particular computer. Also, in some embodiments, the method stores the diversity indicia for each computer in a centralized storage (e.g., database).

In some embodiments, a security element is a function used by the DRM computer to protect the content. Examples of such functions include (1) encryption functions used by the DRM computer to encrypt the content, (2) integrity functions used by the DRM computer to sign the content, and/or (3) encryption-key management functions used by the DRM computer to generate or encrypt cryptographic keys for an encryption function that encrypts the content, etc.

In some embodiments, the DRM computer identifies the security element function for a particular computer by selecting the security element function from a set of different security element functions based on the set of diversity indicia for the particular computer. In some embodiments, the set of security element functions includes security element functions that are mathematically related (e.g., are all mathematically related), while in other embodiments the set of security element functions does not include mathematically related set of functions.

In some embodiments, the DRM computer identifies a particular security element function for a particular user computer on the first occasion that the particular user computer requests a protected content. The DRM computer then uses the particular security element function for the particular user computer for subsequent requests for protected content from the particular user computer. In some embodiments, the DRM computer identifies a new security element function for the particular user computer after a given period of time or after a specific event occurred (such as revocation of a security element or after a given number of user requests for protected content).

Each user computers receives requested content in a format that is protected based on the diversity data associated with the user computer (i.e., associated with the user computer itself or one of its users). Each user computer removes the protection that is applied to the content in order to access the content. To remove the protection, a user computer uses one access function that is appropriate for each security function that the DRM computer applied to the content. Specifically, for each particular security function (e.g. encryption function, key generation function, integrity function, etc.) applied by the DRM computer, the user computer uses a particular access function (e.g., decryption function, key generation function, verification function, etc.) that is appropriate to remove, generate, or verify the protection that was applied by the particular security function.

In different embodiments, the user computer uses different techniques to identify the appropriate set of access functions to use for each piece of content it receives from the DRM server set. For instance, in some embodiments, the user computer has an application for accessing DRM content. This application sends the diversity indicia for the user computer to the DRM computer. Based on this diversity data, this application selects (i.e., is configured to select) a set of access functions that are appropriate for the set of security element functions that the DRM computer will utilize when it receives the diversity indicia set from the user computer. Alternatively, in the embodiments where the DRM computer sends diversity data to the user computers, the DRM computer might also send data that directs a user computer to select the appropriate set of access functions.

Some embodiments described above utilize one computer to provide the protected content while using another computer to provide the DRM protection for the content. One of ordinary skill will realize that some embodiments utilize one computer to provide protected content and the DRM protection for the content.

### BRIEF DESCRIPTION OF THE DRAWINGS

The novel features of the invention are set forth in the appended claims. However, for purpose of explanation, several embodiments are set forth in the following figures.
**Figure 1** illustrates a digital rights management (DRM) system of some embodiments.
**Figure 2** illustrates a more detailed embodiment of the content-distribution method of some embodiments of the invention.
**Figure 3** illustrates a DRM engine of a DRM server of some embodiments.
**Figures 4, 5,** and **6** illustrate examples of simple sets of functions that are mathematically related.
**Figure 7** conceptually illustrates a process that a user computer performs to obtain and access a piece of DRM content.

### DETAILED DESCRIPTION OF THE INVENTION

In the following description, numerous details are set forth for the purpose of explanation. However, one of ordinary skill in the art will realize that the invention may be practiced without the use of these specific details. In other instances, well-known structures and devices are shown in block diagram form in order not to obscure the description of the invention with unnecessary detail.

### I. OVERVIEW

Some embodiments of the invention provide a digital rights management (DRM) method for distributing content to users over a network. Based on a first set of diversity indicia, the method identifies a first security element for distributing a set of content to a first computer. The set of content includes one or more pieces of content. Based on a second set of diversity indicia, the method identifies a second security element for distributing the set of content to a second computer. Based on the first security element, the method protects the set of content for the first computer and sends the protected set of content to the first computer through the network. Based on the second security element, the method protects the set of content for the second computer and sends the protected set of content to the second computer through the network.

At a DRM computer, the method in some embodiments receives (1) the first set of diversity indicia from the first computer and (2) the second set of diversity indicia from the second computer. In other embodiments, the DRM computer does not receive diversity indicia but instead assigns the set of diversity indicia for each computer. Alternatively, in some embodiments, the DRM computer might receive and generate diversity data in the set of indicia that it uses for a particular computer. Also, in some embodiments, the method stores the diversity indicia for each computer in a centralized storage (e.g., database).

In some embodiments, a security element is a function used by the DRM computer to protect the content. Examples of such functions include (1) encryption functions used by the DRM computer to encrypt the content, (2) integrity functions used by the DRM computer to sign the content, and/or (3) encryption-key management functions used by the DRM computer to generate or encrypt cryptographic keys for an encryption function that encrypts the content, etc.

In some embodiments, the DRM computer identifies the security element function for a particular computer by selecting the security element function from a set of different security element functions based on the set of diversity indicia for the particular computer. In some embodiments, the set of security element functions includes security element functions that are mathematically related (e.g., are all mathematically related), while in other embodiments the set of security element functions does not include mathematically related set of functions.

In some embodiments, the DRM computer identifies a particular security element function for a particular user computer on the first occasion that the particular user computer requests a protected content. The DRM computer then uses the particular security element function for the particular user computer for subsequent requests for protected content from the particular user computer. In some embodiments, the DRM computer identifies a new security element function for the particular user computer after a given period of time or after a specific event occurred (such as revocation of a security element or after a given number of user requests for protected content).

As mentioned above, each user computers receives requested content in a format that is protected based on the diversity data associated with the user computer (i.e., associated with the user computer itself or one of its users). Each user computer removes the protection that is applied to the content in order to access the content. To remove the protection, a user computer uses one access function that is appropriate for each security function that the DRM computer applied to the content. Specifically, for each particular security function (e.g. encryption function, key generation function, integrity function, etc.) applied by the DRM computer, the user computer uses a particular access function (e.g., decryption function, key generation function, verification function, etc.) that is appropriate to remove, generate, or verify the protection that was applied by the particular security function.

In different embodiments, the user computer uses different techniques to identify the appropriate set of access functions to use for each piece of content it receives from the DRM server set. For instance, in some embodiments, the user computer has an application for accessing DRM content. This application sends the diversity indicia for the user computer to the DRM computer. Based on this diversity data, this application selects (i.e., is configured to select) a set of access functions that are appropriate for the set of security element functions that the DRM computer will utilize when it receives the diversity indicia set from the user computer. Alternatively, in the embodiments where the DRM computer sends diversity data to the user computers, the DRM computer might also send data that directs a user computer to select the appropriate set of access functions.

Some embodiments utilize one computer to provide the protected content while using another computer to provide the DRM protection for the content. One of ordinary skill will realize that some embodiments utilize one computer to provide protected content and the DRM protection for the content.

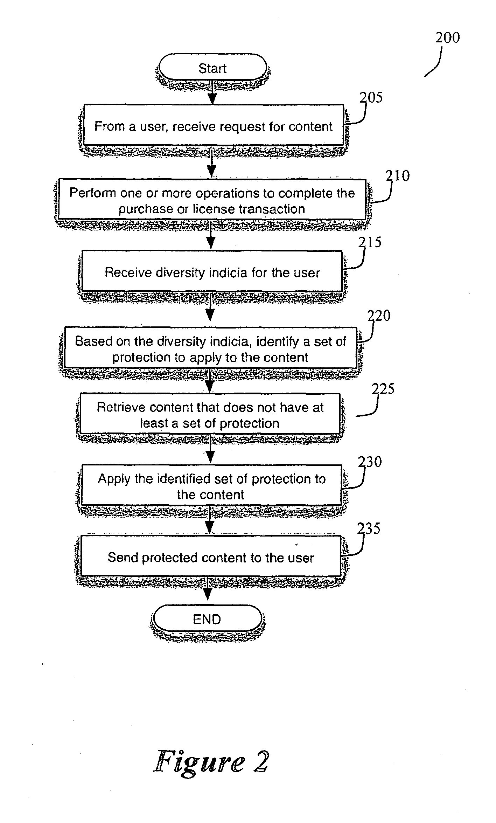

**Figure 2** illustrates a more detailed embodiment of the content-distribution method of some embodiments of the invention. This method is further described below in Section III. However, before describing this method, the content distribution system of some embodiments is first described below in Section II.

### II. DRM SYSTEM

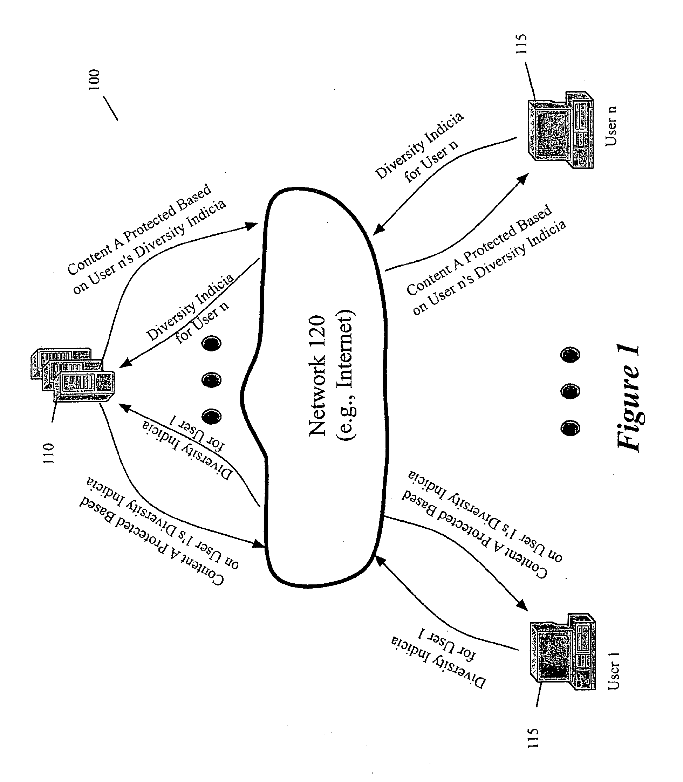

**Figure 1** illustrates a digital rights management (DRM) system 100 of some embodiments. This DRM system distributes content in a manner that ensures the legal use of the content. As shown in **Figure 1,** the DRM system 100 includes a set of DRM servers 110 that distribute content to a set of N user computers 115. The set of servers 110 connects to the user computers 115 through a computer network 120, such as a local area network, a wide area network, a network of networks (e.g., the Internet), etc.

Through this connection, the user computers 115 communicate with the set of DRM servers 110 to purchase or license content in some embodiments. However, in other embodiments, the DRM system 100 does not sell or license the content. For instance, in some of these embodiments, the DRM server 110 simply enforces the distribution of content to authorized computers without having any financial objective.

For purposes of illustration, however, several embodiments of the DRM system 100 that are described below are involved in the sale or licensing of the content. Accordingly, in these embodiments, the set of DRM servers 110 includes a server from which the user of a computer 115 can purchase or license content. In other words, a DRM server 110 of some embodiments is the server that handles the financial transaction for purchasing or licensing content. In some instance, certain content can be purchased or licensed free.

In some embodiments, the set of DRM servers 110 also includes a content caching server that provides encrypted content to a user computer 110 through the network 120, after another DRM server 110 determines that the computer 110 can obtain the content. In some embodiments, the system 100 uses multiple caching servers to cache content at various locations on the network, in order to improve the speed and efficiency of downloading content across the network.

In **Figure 1,** the DRM server set 110 protects one piece of content in two different ways for two different users based on two different sets of indicia that identify the two different users. In some embodiments, the DRM server set defines for each user all or some of the indicia in the user's set of diversity indicia as mentioned above. However, for the embodiments illustrated in **Figure 1,** the DRM server set receives the two different sets of indicia from the user computers.

Specifically, **Figure 1** illustrates User 1 providing a first set of diversity indicia to the DRM server(s) 110 through the network. In some embodiments, the first set of diversity indicia identifies the User 1 in the DRM system 100. Examples of such diversity indicia include any type of information that can be used to identifying the user (e.g., account number, address, etc.), the user's computer (e.g., MAC numbers, etc.), etc. Based on the diversity indicia of User 1, the DRM server set 110 identifies one or more protection functions (e.g., encryption functions, integrity functions, key generation or management functions, etc.) to protect a piece of content A. The DRM server set 110 then uses the identified protection functions to protect the piece of content A (e.g., encrypt, sign, generate or manage cryptographic keys, etc.) for the User 1. The DRM server set 110 then sends the protected content A to the User 1 through the network 120.

**Figure 1** also illustrates User N providing a second set of diversity indicia to the DRM server(s) 110 through the network. In some embodiments, the second set of diversity indicia identifies the User N in the DRM system 100. Again, examples of such diversity indicia include any type of information that can be used to identifying the user (e.g., account number, address, etc.), the user's computer (e.g., MAC address, etc.), etc. Based on the diversity indicia of User N, the DRM server set 110 identifies one or more protection functions (e.g., encryption functions, integrity functions, key generation or management functions, etc.) to protect a piece of content A. The DRM server set 110 then uses the identified protection functions to protect the piece of content A (e.g., encrypt, sign, generate or manage cryptographic keys, etc.) for the User N. The DRM server set 110 then sends the protected content A to the User N through the network 120.

Each user computers 115 thus receives the requested content in a format that is protected based on the diversity data associated with the user computer (i.e., associated with the user computer itself or one of its users). Each user computer then removes the protection that is applied to the content in order to access the content. To remove the protection, a user computer uses one or more access functions that are appropriate for the protection function(s) that the DRM server set applied to the content. Specifically, for each particular protection function (e.g. encryption function, key generation function, integrity function, etc.) applied by the DRM server set 110, the user computer uses a particular access function (e.g., decryption function, key generation function, verification function, etc.) that is appropriate to remove, generate, or verify the protection that was applied by the particular protection function.

In different embodiments, the user computer uses different techniques to identify the appropriate set of access functions to use for each piece of content it receives from the DRM server set. For instance, in some embodiments, the user computer has an application for accessing DRM content. This application sends the diversity indicia for the user computer to the DRM server set. Based on this diversity data, this application selects (i.e., is configured to select) a set of access functions that are appropriate for the set of security element functions that the DRM server will utilize when it receives the diversity indicia set from the user computer. Alternatively, in the embodiments where the DRM server set sends diversity data to the user computers, the DRM server set might also send data that directs a user computer to select the appropriate set of access functions.

### III. DIVERSIFIED CONTENT PROTECTION PROCESS

**Figure 2** conceptually illustrates a diversified content protection process 200 that the DRM server set 110 performs in some embodiments of the invention. As shown in this figure, the process 200 initially receives (at 205) a request to purchase or license a piece of content from a user computer 115.

The process 200 then performs one or more operations (at 210) to complete the purchase or license transaction. After the transaction has been completed, the process receives (at 215) a set of diversity indicia from the user. This set of indicia can be provided automatically by the user's computer without any input from the user. Alternatively, the user might have to provide some input that is accounted for in this set of indicia. Examples of such indicia were described above.

In some embodiments, the set of DRM servers 110 might not receive the diversity indicia of a user each time that the user tries to purchase or license content. For instance, in some of these embodiments, the DRM server set receives the diversity indicia from a user the first time that the user's computer is registered in the DRM system 100. Alternatively, the DRM server of other embodiments periodically receives diversity indicia from a user's computer. Also, as mentioned above, the DRM server set might assign some or all of the diversity indicia for a user in some embodiments of the invention.

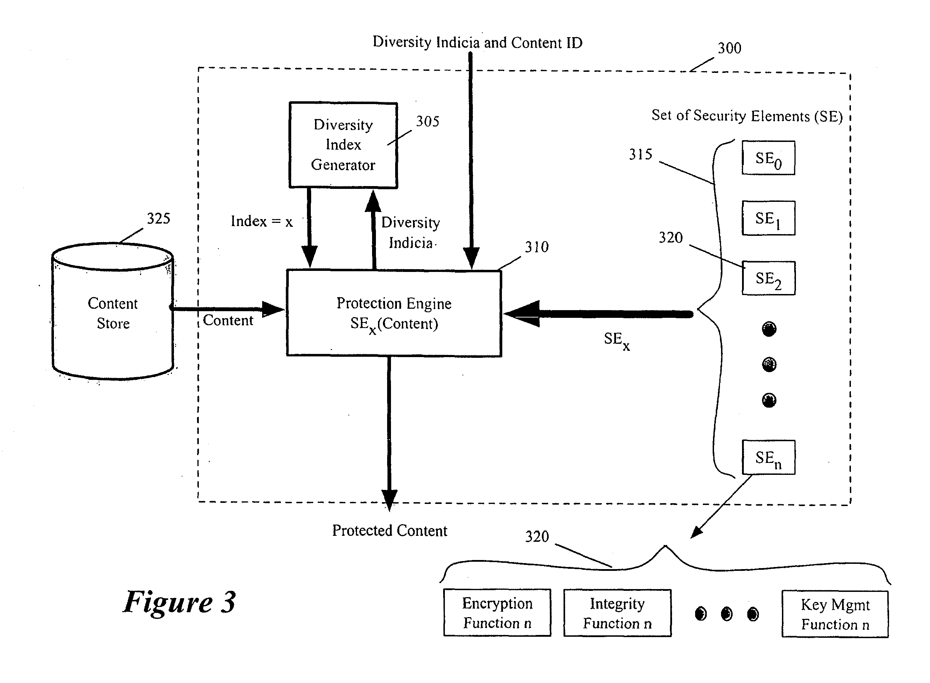

At 220, the process then identifies a set of protection functions to apply to the requested piece of content. The process identifies the set of protection functions based on the diversity indicia identified at 215. **Figure 3** illustrates an example of how some embodiments identify the set of protection functions at 220. Specifically, this figure illustrates the DRM engine 300 of a DRM server of some embodiments. The DRM engine 300 includes a diversity index generator 305, a protection engine 310, and a group 315 of security element function sets 320.

As shown in **Figure 3,** the protection engine 310 of the DRM engine 300 receives (1) an identification parameter that identifies the requested piece of content and (2) a set of diversity indicia that identifies the user that requested the piece of content. The protection engine then passes the set of diversity indicia to the diversity index generator 305. Based on the received set of diversity indicia, the index generator then generates an index X that identifies a set SEₓ of security element functions in the group 315.

Each set of security element functions can include one or more security element (SE) functions. Each set of SE functions has at least one SE function different with each other set of SE functions. Examples of SE functions in a set of SE functions include an encryption function, an integrity function, key generation function, and/or a key management function, etc. Examples of these SE functions are further described below in Section IV.

Once the process 200 uses (at 220) the diversity indicia to identify a set of protection functions to protect the requested content, the process 200 retrieves the requested content. **Figure 3** illustrates an example of this operation, as it shows the protection engine 310 retrieving the requested content from the content store 325.

The process then uses (at 230) the set of protection functions identified at 220 to protect the retrieved content. **Figure 3** illustrates an example of this operation at 230. This figure shows the protection engine 310 applying the identified set SEₓ of SE functions to the retrieved content to protect it for transmission over the network and to restrict access to the content to the user who purchased or licensed the content. At 235, the process then sends the protected content to the user's computer through the network 120. After 235, the process ends.

### IV. SECURITY ELEMENT FUNCTIONS

As mentioned above, each set of SE functions 320 illustrated in **Figure 3** can include one or more SE functions, such as encryption functions, integrity functions, and/or key management functions, etc. An encryption function can be used to encrypt the requested content. An encryption function can also be used to encrypt a key that is used by another encryption function used by the protection engine (e.g., the encryption function that encrypts the content).

Encrypting data (e.g., content or keys) entails transforming the data from a decipherable form (called plaintext) into an indecipherable form (called ciphertext) based on one or more cryptographic keys. Decrypting content, on the other hand, entails transforming encrypted content into a decipherable form by using one or more cryptographic keys.

An encryption key is a piece of information that controls the operation of a cryptography algorithm. In symmetrical encryption technology, the key that is used to encrypt data is the same key that is used to decrypt data. In asymmetric encryption technology, the same key is not used to encrypt and decrypt the data. For instance, in one scheme, an encrypting device uses a public key of a recipient to encrypt data, and the recipient uses its private key to decrypt the encrypted data.

Many of the features of the embodiments described in this document can be employed in a symmetrical or asymmetrical protection process. Also, in some embodiments, the encryption is applied to a binary format of the data. Although the unencrypted binary format of a piece of data may be hard for a human to decipher, it can be deciphered by an application or an operating system. On the other hand, encrypted binary format of a piece of data ideally should not be deciphered by any application or operating system, without first being decrypted by using one or more cryptographic keys.

Different sets of SE functions might have different encryption functions. For instance, one set of SE functions might have AES, DES, or triple DES while another set of SE functions has RSA.

An integrity function is a function that is used to verify the integrity of the message, it can also be used to authenticate the different members of the DRM system, and hence the source of the content and keys distributed through the system. Some embodiments use an RSA signature based on PKCS #1 recommendation using integrity digest functions such as MD5, SHA-1. Different sets of SE functions might have different integrity functions.

A key management function relates to how the keys that are used for the protection functions are managed. For instance, for different users, some embodiments use different encryption functions to encrypt the keys that are used (by another encryption function or other encryption functions) to encrypt/decrypt the content.

As mentioned above, each set of SE functions has at least one SE function different with each other set of SE functions. In some embodiments, the SE functions that are of the same type (e.g., are encryption functions) are mathematically related functions. The mathematically related SE functions have the same functional expression, but have different output values as they have different parametric values. The different parametric values are values that are derived from each user's diversity indicia.

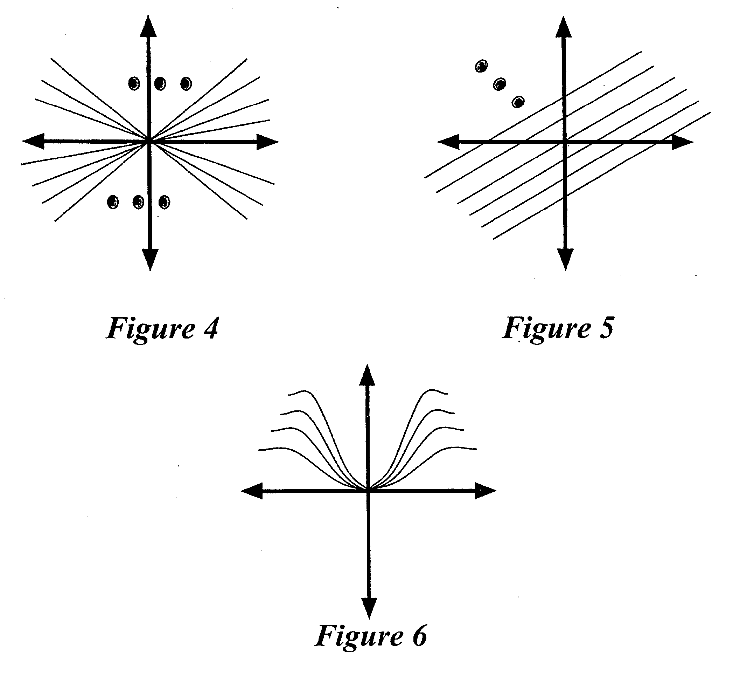

**Figures 4, 5,** and **6** illustrate examples of simple sets of functions that are mathematically related. In **Figure 4,** each mathematically related function in the set of mathematically related functions has different slope. Hence, the parametric value in this example is the slope. In **Figure 5**, each function in the set of mathematically related functions has different y-intercept value. Accordingly, the parametric value in this example is the y-intercept value. In **Figure 6,** each mathematically related function in the set of mathematically related functions has different shape and can be represented by a polynomial expression. Hence, the parametric value in this example is the part of one or more exponents of the polynomial expression.

In some embodiments, the SE functions in the set of functions are not a mathematically related set of functions. For instance, the set of functions might be functions that are stored in a look-up table, which is indexed and accessed based on the index value generated by the diversity index generator 305.

### V. CONTENT ACCESS

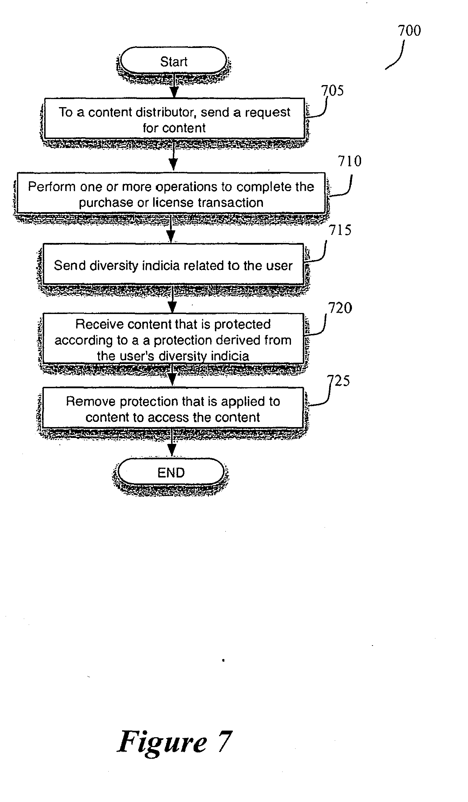

**Figure 7** conceptually illustrates a process 700 that a user computer 115 performs to obtain and access a piece of DRM content. As shown in this figure, the process 700 initially sends (at 705) a request for content to the set of DRM servers 110. The process 700 then performs one or more operations (at 710) to complete the purchase or license transaction.

After the transaction has been completed, the process sends (at 715) the diversity indicia of the user to the set of DRM servers 110. This indicia can be provided automatically by the user's computer without any input from the user. Alternatively, the user might have to provide some input that is accounted for in this set of indicia. Examples of such indicia were described above.

In some embodiments, the user computer 115 might not provide the diversity indicia of the user each time that the user tries to purchase or license content. For instance, in some of these embodiments, the user computer supplies the diversity indicia of the user the first time that the computer is registered in the DRM system 100. Alternatively, a particular user computer of other embodiments provides new diversity indicia for the particular user computer after a given period of time or after a specific event occurred (such as after a given number of user requests for protected content).

At 720, the process receives the requested content in a format that is protected based on the diversity indicia provided by the user. The process then removes (at 725) the protection that is applied to the content in order to access the content. To remove the protection, the user computer uses (at 725) an access function set that is appropriate for the security function set that the DRM server set applied (at 230) to the received content. Specifically, for each particular security function (e.g. encryption function, key generation function, integrity function, etc.) in the security function set applied at 230, the access function set includes a particular access function (e.g., decryption function, key generation function, verification function, etc.) that is appropriate to remove, generate, or verify the protection that was applied by the particular security function.

In different embodiments, the user computer uses different techniques to identify the appropriate set of access functions to use for each piece of content it receives from the DRM server set. For instance, in some embodiments, the user computer has an application for accessing DRM content. This application sends the diversity indicia for the user computer to the DRM server set. Based on this diversity data, this application selects (i.e., is configured to select) a set of access functions that are appropriate for the set of security element functions that the DRM server will utilize when it receives the diversity indicia set from the user computer. Alternatively, in the embodiments where the DRM server set sends diversity data to the user computers, the DRM server set might also send data that directs a user computer to select the appropriate set of access functions.

In some embodiments, the process 700 stores (at 720) the received requested content, and then removes (at 725) the protection each time the user needs to access the received content. In other embodiments, the process removes (at 725) the protection that is applied to the content, and stores (at 725) the content in an unprotected format or in a newly protected format. In these embodiments, each time the user wishes to access the received content, the user computer can access the content in the unprotected format, or can remove the protection that it previously specified and then access the content. After 725, the process ends.

While the invention has been described with reference to numerous specific details, one of ordinary skill in the art will recognize that the invention can be embodied in other specific forms without departing from the spirit of the invention. For instance, **Figures 1** and **2** illustrate a DRM system that receives diversity indicia from computers that try to obtain protected content from a DRM server. However, as mentioned above, the DRM server of other embodiments does not receive diversity indicia from the user computers but instead assigns the set of diversity indicia for each user computer. Alternatively, in some embodiments, the DRM server might generate and receive diversity indicia for the set of indicia that it uses for a particular computer. Thus, one of ordinary skill in the art would understand that the invention is not to be limited by the foregoing illustrative details, but rather is to be defined by the appended claims.

## Claims

1. A method comprising:
a. identifying a set of diversity indicia; and
b. based on the identified set of diversity indicia, selecting a particular security element from a plurality of security elements, said particular security element for protecting content.

2. The method of claim 1, wherein the particular security element comprises a security function.

3. The method of claim 1, wherein the particular security element comprises an encryption function for encrypting the content.

4. The method of claim 1, wherein the particular security function comprises a key management function.

5. The method of claim 4, wherein the key management function is for generating cryptographic keys for encrypting the content.

6. The method of claim 4, wherein the key management function is for encrypting cryptographic keys for encrypting the content.

7. The method of claim 1, wherein the particular security function comprises an integrity function for generating a signature for the content.

8. The method of claim 1 further comprising using the particular security element to protect the content.

9. The method of claim 8 further comprising distributing the protected content to a user of the content.

10. The method of claim 9, wherein the set of diversity indicia is associated with the user of the content.

11. The method of claim 9, wherein the set of diversity indicia is associated with a device of the user of the content.

12. The method of claim 1, wherein the set of diversity indicia is associated with a user that is to receive the content.

13. The method of claim 12, wherein the set of diversity indicia is associated with a particular user account.

14. The method of claim 1, wherein the set of diversity indicia is associated with a device of a user that is to receive the content.

15. The method of claim 1, wherein selecting the particular security element comprises:
a. receiving at least one diversity indicia that identifies a user that is requesting the particular content; and
b. generating an index based on the diversity indicia, the index identifying the particular security element.

16. The method of claim 1 further comprising:
a. performing a financial transaction; and
b. distributing the protected content to a user of the content.

17. The method of claim 1, wherein the content is protected for distribution to a first user of the content and the selected security element is a first security element, the method further comprising
a. identifying another set of diversity indicia; and
b. based on the identified other set of diversity indicia, selecting a second security element from the plurality of security elements, said second security element for protecting the content for distribution to a second user, said second security element different than the first security element.

18. The method of claim 1, wherein the selecting comprises selecting at least two security elements from the plurality of security elements, the two security elements for protecting the content during distribution.

19. The method of claim 1, wherein the method is for content distribution and the particular security element is for protecting content during distribution.

20. A computer readable medium storing a computer program executable by at least one processor, the computer program comprising sets of instructions for:
a. identifying a set of diversity indicia;
b. based on the identified set of diversity indicia, selecting a particular security element from a plurality of security elements, said particular security element for protecting content.

21. The computer readable medium of claim 20, wherein the particular security element comprises an encryption function for encrypting the content.

22. The computer readable medium of claim 20, wherein the particular security element comprises a key management function.

23. The computer readable medium of claim 22, wherein the key management function is for generating cryptographic keys for encrypting the content.

24. The computer readable medium of claim 23, wherein the key management function is for encrypting cryptographic keys for encrypting the content.

25. The computer readable medium of claim 20, wherein the particular security element comprises an integrity function for generating a signature for the content.

26. The computer readable medium of claim 20, wherein the set of diversity indicia is associated with a user that is to receive the content.

27. The computer readable medium of claim 26, wherein the set of diversity indicia is associated with a particular user account.

28. The computer readable medium of claim 20, wherein the set of diversity indicia is associated with a device of a user that is to receive the content.

29. The computer readable medium of claim 20, wherein the set of instructions for selecting the particular security element comprises sets of instructions for:
a. receiving at least one diversity indicia that identifies a user that is requesting the particular content; and
b. generating an index based on the diversity indicia, the index identifying the particular security element.

30. The method of claim 20, wherein the set of instructions for selecting comprises a set of instructions for selecting at least two security elements from the plurality of security elements, the two security elements for protecting the content during distribution.

31. The computer readable medium of claim 20, wherein the computer program is for protecting content during distribution and the particular security element is for protecting content during distribution.

32. A method for accessing content that is protected by using a security element that is based on a set of diversity indicia, the method comprising:
a. identifying a particular access function that is associated with the set of diversity indicia; and
b. accessing the content by using the particular access function.

33. The method of claim 32, wherein the particular access function comprises a decryption function for decrypting the content.

34. The method of claim 32, wherein the particular access function comprises a key generation function.

35. The method of claim 32, wherein the particular access function comprises a verification function for verifying a signature for the content.

36. The method of claim 32 further comprising supplying the set of diversity indicia before receiving the content.

37. The method of claim 36, wherein supplying the set of diversity indicia comprises supplying the set of indicia to a computer for identifying the security element from a plurality of security elements based on the supplied set of indicia.

38. The method of claim 36, wherein the set of diversity indicia is supplied for more than one pieces of content.

39. A computer readable medium storing a computer program for accessing content that is protected by using a security element that is based on a set of diversity indicia, said computer program executable by at least one processor, the computer program comprising sets of instructions for:
a. identifying a particular access function that is associated with the set of diversity indicia; and
b. accessing the content by using the particular access function.

40. The computer readable medium of claim 39, wherein the particular access function comprises a decryption function for decrypting the content.

41. The computer readable medium of claim 39, wherein the particular access function comprises a key generation function.

42. The computer readable medium of claim 39, wherein the particular access function is appropriate for verifying a protection that is applied to the particular content by the security function.

43. The computer readable medium of claim 39, wherein the computer program further comprises a set of instructions for supplying the set of diversity indicia before receiving the content.

44. The computer readable medium of claim 43, wherein the set of instructions for supplying the set of diversity indicia comprises a set of instructions for supplying the set of indicia to a computer for identifying the security element from a plurality of security elements based on the supplied set of indicia.

45. The computer readable medium of claim 43, wherein the set of diversity indicia is supplied for more than one pieces of content.

46. A digital rights management (DRM) method for protecting content, the method comprising:
a) based on a first set of diversity indicia, identifying a first security element for distributing a set of content to a first computer;
b) based on a second set of diversity indicia, identifying a second security element for distributing the set of content to a second computer;
c) based on the identified first security element, protecting the set of content for the first computer; and
d) based on the identified second security element, protecting the set of content for the second computer.

47. The method of claim 46 further comprising:
a) at a DRM computer, receiving the first set of diversity indicia from the first computer; and
b) at the DRM computer, receiving the second set of diversity indicia from the second computer.

48. The method of claim 46, wherein the first computer is the computer of a first user and the second computer is the computer of a second user.

49. The method of claim 46, wherein each security element is a function used by the DRM computer to protect the content.

50. The method of claim 49, wherein the first and second functions are first and second encryption functions used by the DRM computer to encrypt the content.

51. The method of claim 49, wherein the first and second functions are first and second integrity functions used by the DRM computer to sign the content.

52. The method of claim 46, wherein identifying the first security element comprises selecting a first security element function from a set of different security element functions based on the first set of diversity indicia.

53. The method of claim 46 further comprising sending the protected set of content to the first and second computers.

54. A digital rights management (DRM) system for distributing content, the system comprising:
a) a plurality of user computers;
b) a set of DRM computers communicatively coupled to the user computers, the set of DRM computers for receiving requests to access a particular content from a plurality of the user computers;
c) for each particular user computer that requests access to the particular content, the set of DRM computers for
1) identifying a particular security element function for distributing the particular content to the particular user computer based on a set of diversity indicia for the particular user computer;
2) protecting the particular content for the particular user computer, based on the identified security element function; and
3) sending the protected particular content to the particular user computer.

55. The system of claim 54, wherein the set of DRM computers receives a set of diversity indicia from each user computer.

56. The system of claim 54, wherein the security element function is an encryption function used by the DRM computer to encrypt the content.

57. The system of claim 54, wherein the security element function is an integrity function used by the DRM computer to sign the content.

58. The system of claim 54, wherein the set of DRM computers identifies the security element function for a particular user computer by selecting the security element function from a set of different security element functions based on the set of diversity indicia for the particular user computer.
